# EUROPÄISCHE PATENTSCHRIFT

(11) **EP 2 885 061 B1**
(45) Veröffentlichungstag und Bekanntmachung des Hinweises auf die Patenterteilung: **09.11.2016**
(21) Anmeldenummer: 13753557.1
(22) Anmeldetag: 29.07.2013
(51) Int. Cl.: B01D 35/147, B01D 35/15, B01D 35/153, B01D 29/11, F16D 48/02, F15B 21/04

(54) **FLUIDFILTER**
FILTER FOR FLUID
FILTRE POUR FLUIDE

(30) Priorität: 16.08.2012 DE 102012214542
(43) Veröffentlichungstag der Anmeldung: 24.06.2015
(73) Patentinhaber: Schaeffler Technologies AG & Co. KG, 91074 Herzogenaurach (DE)
(72) Erfinder: BAßLER, Manuel, 77855 Achern (DE); SCHOLZ, Peter, 76137 Karlsruhe (DE); WELTER, Roland, 77815 Bühl (DE)
(86) Internationale Anmeldenummer: PCT/DE2013/200078
(87) Internationale Veröffentlichungsnummer: WO 2014/026681

(56) Entgegenhaltungen:
- DE-A1- 2 947 411
- DE-A1- 19 804 547
- DE-A1-102007 031 751
- FR-A1- 2 235 727
- US-A- 3 289 841

## Beschreibung

Die Erfindung betrifft ein Fluidfilter geeignet zur Verwendung in einem hydraulischen System zur Betätigung einer Ausrückvorrichtung im Antriebsstrand eines Kraftfahrzeuges umfassend einen Geberzylinder, einen Nehmerzylinder sowie eine diese verbindende Hydraulikleitung, in der ein Fluidfilter angeordnet ist, wobei der Fluidfilter einen Filtereinsatz umfasst sowie ein hydraulisches System zur Betätigung einer Ausrückvorrichtung im Antriebsstrang eines Kraftfahrzeuges umfassend einen Geberzylinder, einen Nehmerzylinder sowie eine diese verbindende Hydraulikleitung, in der ein Fluidfilter angeordnet ist, das ein Filtereinsatz umfasst.

In hydraulischen Systemen zur Kupplungsbetätigung in Kraftfahrzeugen können fertigungsbedingt oder durch Verschleiß im Betrieb Schmutzpartikel als Schwebstoffe in dem Hydraulikfluid enthalten sein. Diese können die Betriebssicherheit des hydraulischen Systems beeinträchtigen.

Aus der Druckschrift DE 10 2007 025 411 A1 ist ein hydraulisches Ausrücksystem bekannt, wobei der Geberzylinder über eine Nachlaufleitung mit einem Flüssigkeitsreservoir verbunden ist und in die Verbindung ein Filter eingesetzt ist. Durch diese Anordnung wird beim Schnüffeln nachfließendes Hydraulikfluid gefiltert.

Aus der Druckschrift FR 2 235 727 A1 ist ein Fluidfilter gemäß dem Oberbegriff des Patentanspruchs 1 bekannt.

Es ist derzeit kein hydraulisches System bekannt, das eine zuverlässige Reinigung des in dem hydraulischen System zwischen Geber- und Nehmerzylinder befindlichen Hydraulikfluids ermöglicht.

Eine Aufgabe der Erfindung ist es daher, einen Fluidfilter anzugeben, der eine Reinigung des Fluides in dem hydraulischen System dauerhaft gewährleistet.

Diese Aufgabe wird gelöst durch ein Fluidfilter geeignet zur Verwendung in einem hydraulischen System zur Betätigung einer Ausrückvorrichtung im Antriebsstrand eines Kraftfahrzeuges umfassend einen Geberzylinder, einen Nehmerzylinder sowie eine diese verbindende Hydraulikleitung, in der der Fluidfilter angeordnet ist, wobei der Fluidfilter einen Filtereinsatz umfasst und eine Ventilanordnung ein Durchströmen des Filtereinsatzes so bewirkt, dass dieser unabhängig von der Durchströmungsrichtung des Fluidfilters nur in einer Richtung durchströmt wird. Erfindungsgemäß umfasst der Fluidfilter einen Bypass für den Filtereinsatz, der bei Überschreiten einer Druckdifferenz über den Fluidfilter öffnet. Unter der Druckdifferenz über den Fluidfilter ist die Druckdifferenz, sprich der Druckabfall bei Durchströmung, zwischen einer Eingangsseite und einer Ausgangsseite des Fluidfilters zu verstehen. Bei wechselnder Strömungsrichtung wechseln auch Eingangs- und Ausgangsseite. Der Bypass ist durch ein oder mehrere Ventile schaltbar. Zusätzlich zu dem Bypass für den Filtereinsatz umfasst das Fluidfilter einen Leckageströmungsweg. Der Leckagestrom ist nicht schaltbar ausgelegt, stellt also einen dauerhaften nicht schaltbaren Strömungsweg durch das Fluidfilter dar. Der Leckagestrom lässt nur ein geringes Strömungsvolumen zu.

Weiterhin bildet der Filtereinsatz selbst in beide Durchströmungsrichtungen ein Überdruckventil, das bei Öffnen den Bypass für den Filtereinsatz bildet. Die Rückschlagventile bewirken, dass der Filtereinsatz selbst immer in gleicher Richtung durchströmt wird. Wird der Druckabfall bei Durchströmen des Filtereinsatzes zu groß, so wird eines der beiden Überdruckventile geöffnet und so der Bypass zu dem Filtereinsatz geöffnet. Ein hoher oder zu hoher Druckabfall über den Filtereinsatz entsteht bei verschmutztem Filtereinsatz. Die Überdruckventile gewährleisten dadurch auch bei verschmutztem oder gar stark verschmutztem Filtereinsatz die Funktionsfähigkeit des hydraulischen Systems.

Gemäß der Erfindung ist der Filtereinsatz gegen die Kraft mindestens einer Feder axial beweglich in einem Gehäuse des Fluidfilters gelagert. Der Filtereinsatz bildet mit Teilen des Gehäuses des Fluidfilters die Überdruckventile. Die Öffnungsdrücke können dabei durch die Federkennwerte eingestellt werden.

Der Filtereinsatz greift an beiden Seiten in eine Bohrung ein, wobei bei einer Bewegung aus der Bohrung heraus ein Spalt geöffnet wird. Diese Anordnung ist eine relativ einfach zu fertigende und zu montierende Ausführung der Überdruckventile.

In einer weiteren Ausführungsform der Erfindung bewirkt die Ventilanordnung ein Durchströmen des Filtereinsatzes so, dass dieser in beiden Durchströmungsrichtungen des Fluidfilters in der gleichen Richtung durchströmt wird. Unabhängig von der Durchströmungsrichtung des Fluidfilters wird der Filtereinsatz dann in der gleichen Richtung durchströmt.

In einer Ausführungsform der Erfindung umfasst das Fluidfilter einen Filtereinsatz, der zumindest ein Rückschlagventil auf einer Stromseite aufweist, wobei der Filtereinsatz einen Raum umschließt, der über das Rückschlagventil bei Durchströmen des Fluidfilters in eine Richtung mit Hydraulikfluid beaufschlagt wird, sodass Hydraulikfluid von dem umschlossenen Raum durch ein Filtermittel aus dem Filterkorb gedrückt wird und so das Hydraulikfluid gefiltert wird. In einer Ausführungsform der Erfindung weist der Filtereinsatz je ein Rückschlagventil auf beiden Stromseiten auf. Die Rückschlagventile bewirken, dass in beide Durchströmungsrichtungen durch das Fluidfilter die gleiche Strömungsrichtung durch den Filtereinsatz vorliegt.

In einer Ausführungsform der Erfindung sind die Rückschlagventil Schlauchventile. Dies stellt eine kostengünstige Ausführung der Rückschlagventile dar. In einer alternativen Ausführungsform umfassen die Rückschlagventile einen Schwimmer, der axial verlagerbar ist. Auch diese Variante ist kostengünstig zu fertigen und leicht zu montieren.

In einer Ausführungsform der Erfindung umfasst der Filtereinsatz einen hohlzylindrischen Teil, der zwischen zwei Ventilelementen angeordnet ist. Der hohlzylindrische Teil umfasst das eigentliche Filtermittel, beispielsweise Filterpapier oder dergleichen auf einem Trägermaterial, beispielsweise einem groben Gitter oder Längsstreben. Die Ventilelemente dienen einerseits als Halterungen für den hohlzylindrischen Teil und sind andererseits Teile der Überdruckventile.

In einer Ausführungsform der Erfindung sind die Ventilelemente durch zwei Druckfedern vorgespannt in dem Gehäuse angeordnet. Die Druckfedern sowie die Geometrie des Filtereinsatzes, z. B. Durchmesser, Tiefe der Überdeckung von Filtereinsatz und den Bohrungen an beiden Seiten, bestimmen den Öffnungsdruck der Überdruckventile. Der hohlzylindrische Teil kann fest mit den Ventilelementen verbunden sein, kann aber auch nur durch die axial wirkende Federkraft zwischen den Ventilelementen gehalten sein.

Das eingangs genannte Problem wird auch gelöst durch ein hydraulisches System zur Betätigung einer Ausrückvorrichtung im Antriebsstrand eines Kraftfahrzeuges umfassend einen Geberzylinder, einen Nehmerzylinder sowie eine diese verbindende Hydraulikleitung, in der ein erfindungsgemäßes Fluidfilter angeordnet ist.

Im Folgenden werden Ausführungsbeispiele der Erfindung anhand der beiliegenden Zeichnungen erläutert. Dabei zeigen:
- Figur 1: eine schematische Darstellung eines hydraulischen Systems anhand eines Ausführungsbeispiels einer Kupplungsausrückvorrichtung,
- Figur 2: ein erstes Ausführungsbeispiel eines erfindungsgemäßen Fluidfilters,
- Figur 3: den Fluidfilter der Figur 2 bei verschmutztem Filterkorb,
- Figur 4: ein zweites Ausführungsbeispiel eines erfindungsgemäßen Fluidfilters,
- Figur 5: den Fluidfilter der Figur 4 bei verschmutztem Filterkorb.

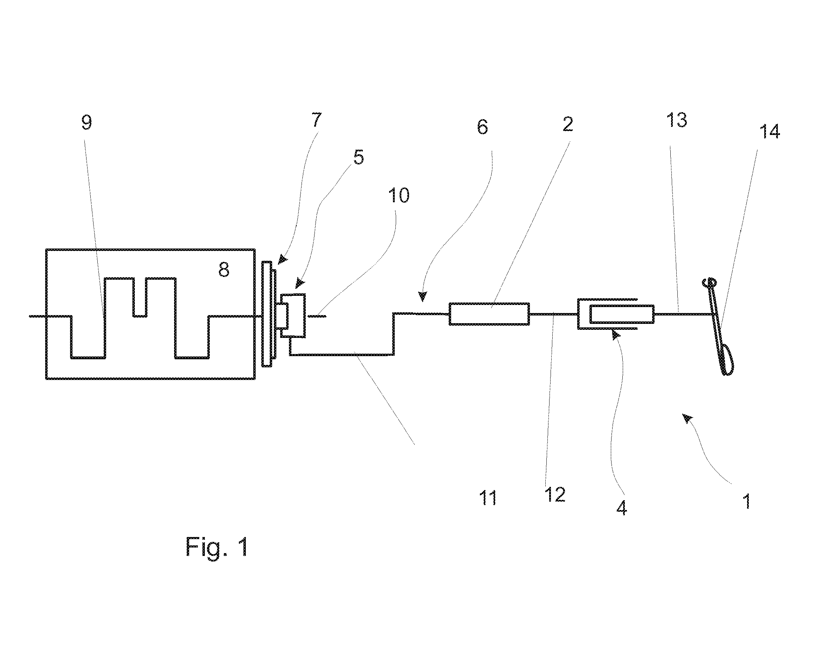

Fig. 1 zeigt in schematischer Darstellung ein Ausführungsbeispiel eines hydraulischen Systems 1 anhand einer Kupplungsausrückvorrichtung mit einem Geberzylinder 4 und einem Nehmerzylinder 5. Ein Fluidfilter 2 ist zwischen einem ersten Leitungselement 11 und einem zweiten Leitungselement 12, die zusammen einen Geberzylinder 4 und Nehmerzylinder 5 verbindende Hydraulikleitung 6 bilden, angeordnet. Es versteht sich, dass der Fluidfilter 2 in anderen Ausführungsbeispielen auch direkt an dem Geberzylinder 4 oder dem Nehmerzylinder 5 angeordnet sein kann.

Das Kupplungsausrücksystem betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann. Hierdurch wird mittels einer mechanischen Übertragung 13 Druck im Geberzylinder 4 aufgebaut, der über die Hydraulikleitung 6 bzw. das zweite Leitungselement 12, den Fluidfilter 2 und das erste Leitungselement 11 einen Druck im Nehmerzylinder 5 aufbaut. Der Nehmerzylinder 5 kann wie in dem gezeigten Beispiel konzentrisch um die Getriebeeingangswelle 10 angeordnet sein und sich axial an einem nicht dargestellten Getriebegehäuse abstützen und die nötige Ausrückkraft über ein Ausrücklager auf die Kupplung 7 aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht dargestelltes Getriebe und anschließend auf die Antriebsräder eines Kraftfahrzeuges.

Das hydraulische System kann auch Teil einer Kupplungsausrückvorrichtung für ein Doppelkupplungsgetriebe sein, in diesem Fall sind prinzipiell zwei hydraulische Systeme parallel zueinander angeordnet und betätigen mit einer Kupplungsausrückvorrichtung jeweils eine Kupplung des Doppelkupplungsgetriebes. Es sind dann zwei Geberzylinder, zwei Nehmerzylinder, zwei Kupplungsausrückvorrichtungen sowie zwei Kupplungen jeweils für einen Teilstrang des Doppelkupplungsgetriebes vorhanden. Dabei kann in jedem der hydraulischen Systeme oder nur in einem der hydraulischen Systeme ein Fluidfilter 2 angeordnet sein.

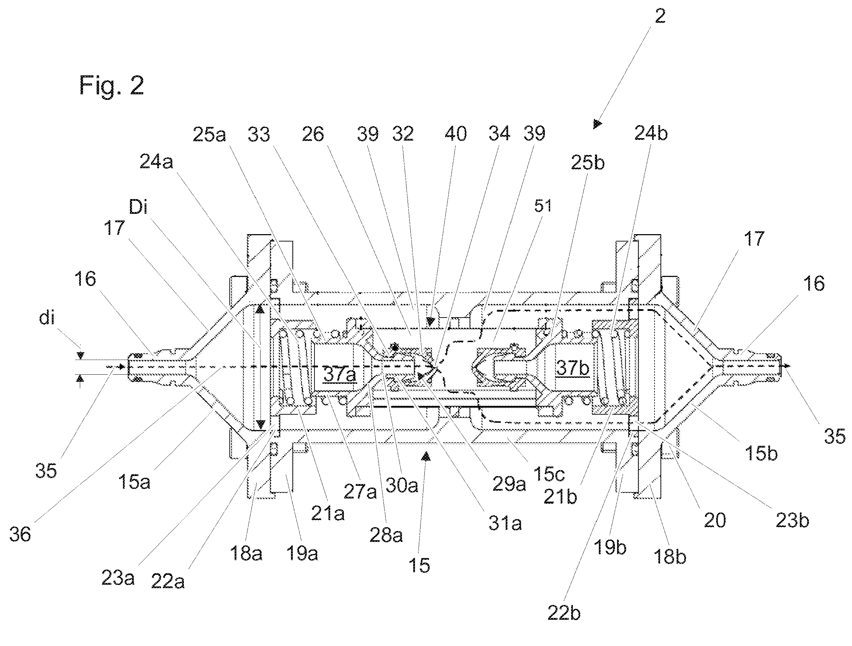

Figur 2 zeigt ein erstes Ausführungsbeispiel eines erfindungsgemäßen Fluidfilters 2 in einem Längsschnitt. Der Fluidfilter 2 umfasst ein Gehäuse 15, welches aus drei Gehäuseteilen 15a, 15b sowie 15c besteht. Die Gehäuseteile 15a und 15b weisen jeweils einen Hydraulikanschluss 16 auf, der beispielsweise das Steckerteil einer hydraulischen Schnellkupplung sein kann. Mittels der hydraulischen Anschlüsse 16 werden die Leitungsteile 11 und 12 mit dem Fluidfilter 2 verbunden. Die Gehäuseteile 15a und 15b weisen jeweils einen konisch verlaufenden Gehäusebereich 17 auf, der den hohlen, die Hydraulikflüssigkeit aufnehmenden Innenraum von einem Innendurchmesser di am Hydraulikanschluss 16 auf einen Innendurchmesser Di aufweitet in dem Bereich, in dem die Gehäuseteile 15a bzw. 15b jeweils mittels Flanschen an dem Gehäuseteil 15a bzw. 15b sowie dem Gehäuseteil 15 mit Letzterem verschraubt sind. Der Flansch des Gehäuseteils 15a ist in Figur 2 mit dem Bezugszeichen 18a, entsprechend ist der Flansch des Gehäuseteils 15b mit dem Bezugszeichen 18b versehen, die Flansche des mittleren Gehäuseteils 15c sind mit den Bezugszeichen 19a und 19b versehen. Die Schrauben, von denen nur eine mit einem Bezugszeichen versehen ist, haben das Bezugszeichen 20. An beiden Seiten des Gehäuses 15, sprich auf Seiten des Gehäuseteils 15a sowie des Gehäuseteils 15b, sind jeweils Federaufnahmen 21 a, 21 b angeordnet. Diese sind mit Flanschen 22a, 22b mit den Gehäuseteilen 15a und 15c bzw. 15b und 15c verbunden, beispielsweise indem das Gehäuseteil 15c an beiden Stirnseiten jeweils eine Stufenbohrung aufweist, in denen die Flansche 22a bzw. 22b eingreifen und bei der Montage der Gehäuseteile 15a und 15b mit dem Gehäuseteil 15c zwischen den Gehäuseteilen 15a und 15c bzw. 15b und 15c festgeklemmt wird. Der Flansch 22a weist Bohrungen 23a über dessen Umfang verteilt auf, entsprechend weist der Flansch 22b über dessen Umfang verteilt Bohrungen 23b auf. Die Federaufnahme 21 a trägt eine Feder 24a, an der sich ein Reuseneinlass 25a abstützt. Entsprechend trägt die Federaufnahme 21 b eine Feder 24b, an der sich ein Reuseneinlass 25b abstützt.

Zwischen dem Reuseneinlass 25a und 25b als Ventilelementen ist ein Filterkorb 26 mit Filtergewebe als Filtereinsatz angeordnet. Der Filterkorb 26 umschließt einen Raum 51. Die Reuseneinlässe 25a, 25b weisen jeweils einen zylindrischen Bereich 27 mit einem Außendurchmesser auf, der in etwa dem Innendurchmesser der Federn 24a bzw. 24b entspricht, sowie einen konischen Bereich 28, der die lichte Weite verringert und ein Schlauchventil 29 trägt. In Figur 2 ist nur der Aufbau des Reuseneinlasses 25a näher mittels Bezugszeichen erläutert, der Reuseneinlass 25b ist im Prinzip identisch dazu aufgebaut. Der Übersichtlichkeit halber wurde die Bezeichnung mit Unterteilung in a und b beibehalten.

Die Reuseneinlässe 25a, 25b tragen jeweils Ventile 37a, 37b, die eine Durchströmung der Reuseneinlässe in eine Richtung ermöglichen und in die andere Richtung sperren. Die Ventile 37a, 37b wirken also als Rückschlagventile. Jedes der Ventile 37a, 37b wirkt in eine Strömungsrichtung und ist so an einer der beiden Stromseiten angeordnet, dass zwischen beiden Ventilen 37a, 37b ein axialer Bauraum verbleibt, sodass dort der Filterkorb 26 angeordnet werden kann. Hydraulikflüssigkeit kann dadurch nur aus den Reuseneinlässen 25a, 25b in den von dem Filterkorb 26 umschlossenen Hohlraum 38 eintreten, aber nicht durch den jeweils anderen Reuseneinlass wieder austreten. Das Fluid strömt daher aus dem Hohlraum 38 durch den Filterkorb 26 in den von dem Gehäuse 15 umschlossenen restlichen Hohlraum 39.

An der dem Bereich 27 abgewandten Seite des konischen Bereichs 28 ist ein zylindrischer Bereich 30 mit kleinem Durchmesser angeordnet, welcher einen umlaufenden Ring 31 trägt. Der umlaufende Ring 31 bildet zu der dem konischen Bereich 28 abgewandten Seite des zylindrischen Bereichs 30 wiederum einen Konus, der auf der anderen Seite eine umlaufende Kante bildet. Die umlaufende Kante wird von einer Hinterschneidung 33 eines Schlauchventilelements 32 hintergriffen. Das Schlauchventilelement 32 weist eine Öffnung 34 auf, die sich bei Durchströmen von dem zylindrischen Bereich mit großem Durchmesser 27 zum zylindrischen Bereich mit kleinem Durchmesser 30 hin öffnet und in die Gegenrichtung schließt. Derartige Schlauchventile sind an sich im Stand der Technik in verschiedensten Varianten bekannt. Im Prinzip bildet das Schlauventil ein Ventil, das in einer Richtung durchströmt werden kann bei keinem oder nur sehr geringem Druckabfall des durchströmenden Fluides, und in die andere Richtung schließt. Der Aufbau beider Filter der Reuseneinlässe 25a, 25b ist im vorliegenden Beispiel identisch, hier können aber auch unterschiedliche Filtereinsätze verwendet werden.

In Figur 2 ist die Durchströmung des Fluidfilters 2 für eine der beiden möglichen Durchströmungsrichtungen skizziert dargestellt. Die Strömungsrichtung wird durch Pfeile 35 an beiden Hydraulikanschlüssen 16 bezeichnet, die Durchströmung des Fluidfilters wird anhand von Stromlinien 36, die gestrichelt dargestellt sind, verdeutlicht.

Bei der in Figur 2 dargestellten Durchströmung wird das erste Ventil 37a durchströmt, das zweite Ventil 37b ist gesperrt. Dadurch strömt das Fluid, sprich Hydrauliköl, um den Reuseneinlass 25b herum und durch die Bohrungen 23b in dem Flansch 22b in den konischen Hohlraum des Gehäuseteils 15b und durch dessen Hydraulikanschluss 16 wieder heraus. Die Durchströmung in die Gegenrichtung ist sinngemäß umgekehrt.

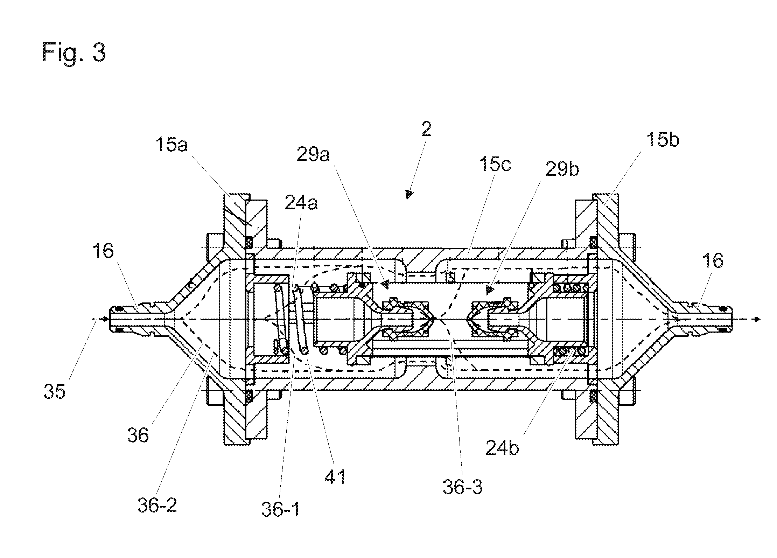

Figur 3 zeigt den Fluidfilter 2 gemäß Figur 2 bei stark verschmutztem Filterkorb 26. Ist der Filterkorb 26 bzw. dessen als durchströmtes Filter wirkende Filterbereiche verschmutzt, so ist ein Durchströmen nur unter großem Druckabfall möglich. Dieser Druckabfall in dem Fluidfilter 2 sorgt dafür, dass der in axialer Richtung federnd gelagerte Filtereinsatz 40, dieser umfasst sämtliche zuvor genannten zwischen den beiden Federn 24a, 24b gelagerten Bauelemente, in axialer Richtung verschoben wird. In dem in Figur 3 gezeigten Beispiel wird der Filtereinsatz 40 in der Zeichenebene nach rechts bewegt. Dadurch wird der zylindrische Bereich 27a aus der Federaufnahme 21 a herausbewegt, sodass sich dort ein Spalt 41 bildet. Auf der gegenüberliegenden Seite wird der zylindrische Bereich 27b gegen die Kraft der Feder 24b in die Federaufnahme 21 b gedrückt. Wie die Stromlinien 36 zeigen, erfolgt nun, dies ist mit dem Bezugszeichen 36-1 bezeichnet, u. a. eine Strömung durch den Spalt 41 und damit an dem Filterkorb 26 mit dem Filtergewebe vorbei. Diese Strömung stellt einen Bypass für den Filtereinsatz 26 dar. Parallel dazu ist immer ein Leckagestrom, dieser ist in Figur 3 mit dem Bezugszeichen 36-2 bezeichnet, möglich. Dieser Leckagestrom 36-2 wurde in der Figur 2 der Übersichtlichkeit halber nicht dargestellt. Zusätzlich erfolgt weiterhin ein kleinerer Strom durch den Filterkorb 26, dieser ist mit dem Bezugszeichen 36-3 dargestellt. Der Filtereinsatz 40 selbst bildet so auf beiden Seiten jeweils ein Überdruckventil, welche bei Öffnen einen Bypass für den Filtereinsatz bilden.

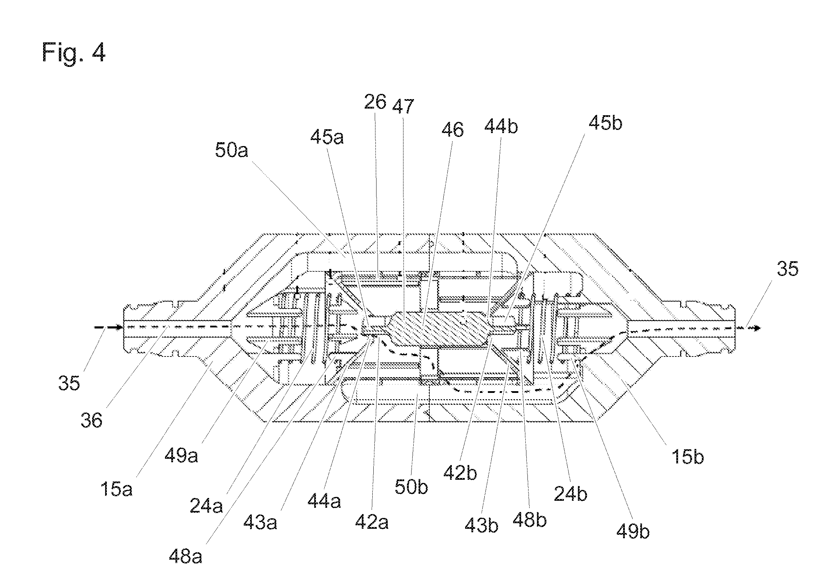

Figur 4 zeigt ein alternatives Ausführungsbeispiel eines erfindungsgemäßen Fluidfilters 2. Die Ventile 37a, 37b werden hier durch Schwimmerventile 42a, 42b gebildet. Die Gehäuseteile 15a und 15b tragen jeweils konische Einsätze 43a, 43b, die an ihrer Stirnseite mit Öffnungen 44a bzw. 44b versehen sind. In die Öffnung 44a ragt ein Zentrierdorn mit kreuzförmigem Querschnitt 45a eines Schwimmers 46, entsprechend ragt in die Öffnung 44b ein Zentrierdorn 45b des Schwimmers 46. Die Zentrierdorne 45a, 45b weisen einen kreuzförmigen Querschnitt auf, bestehen also aus einzelnen Plattenelementen, zwischen denen jeweils ein Hohlraum frei bleibt. Die lichte Weite der Zentrierdorne 45a, 45b ist geringer als die eines zylindrischen Mittelteils 47 des Schwimmers 46. Auf diese Weise wird ein Anschlag in beide axialen Richtungen für den Schwimmer 46 gebildet.

Der Schwimmer 46 ist gegen die Kraft der Federn 24a, 24b in axialer Richtung verschiebbar. Die konischen Einsätze 43a, 43b weisen jeweils Führungsstege 48a, 48b auf, die in die Federn 24a bzw. 24b eingreifen und so die jeweiligen Federenden führen. Die gegenüberliegenden Federenden sind jeweils in Gehäusestegen 49a, 49b der Gehäuseteile 15a, 15b gelagert. Die Stege 48a, 48b, 49a, 49b sind jeweils über den Umfang verteilt angeordnet. Das Gehäuse 15 weist einen ersten Strömungskanal 50a und einen zweiten Strömungskanal 50b auf. Im Bereich der Strömungskanäle 50a, 50b weicht der lichte Innenraum von einem kreisförmigen Querschnitt ab. Ein Filterkorb 26 ist zwischen den konischen Einsätzen 43a, 43b angeordnet.

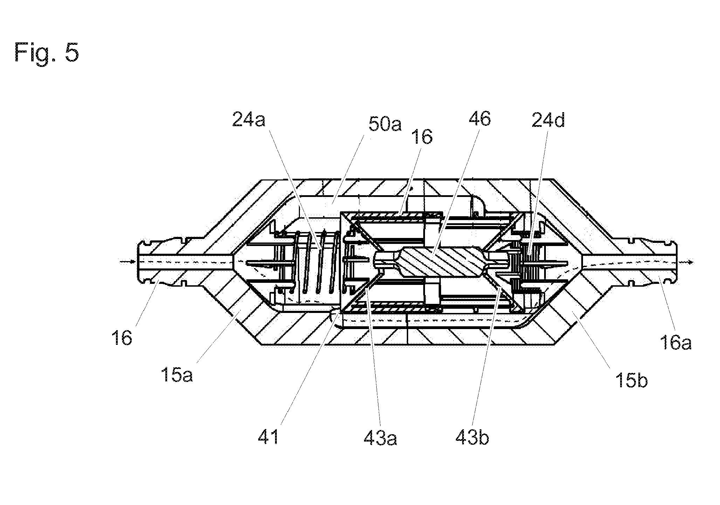

In Figur 4 sind ähnlich wie in Figur 2 mit 35 und 36 jeweils Durchströmungspfeile sowie Stromlinien 36 beim Durchströmen des Fluidventils 2 im Normalbetrieb eingezeichnet. Fig. 5 zeigt die Durchströmungsrichtung wie in Fig. 4 bei verschmutzten Filtern. Die gesamte Filteranordnung umfasst die konischen Einsätze 43a, 43b, den Schwimmer 46 sowie den Filterkorb 26. Er wird bei der dargestellten Betriebssituation in der Zeichenebene nach rechts bewegt, so dass sich ein Spalt 41 öffnet, der eine Durchströmung des Fluidfilters 2 an dem Filterkorb 26 vorbei ermöglicht.

### Bezugszeichenliste

- 1: Hydraulisches System
- 2: Fluidfilter
- 3: Kupplungsausrückvorrichtung
- 4: Geberzylinder
- 5: Nehmerzylinder
- 6: Hydraulikleitung
- 7: Kupplung
- 8: Brennkraftmaschine
- 9: Kurbelwelle
- 10: Getriebeeingangswelle
- 11: erstes Leitungselement
- 12: zweites Leitungselement
- 13: mechanische Übertragung
- 14: Betätigungsglied
- 15: Gehäuse
- 15a, 15b, 15c: Gehäuseteile
- 16: Hydraulikanschluss
- 17: konischer Gehäusebereich
- 18a, 18b: Flansch
- 19a, 19b: Flansch
- 20: Schrauben
- 21a, 21b: Federaufnahmen
- 22a, 22b: Flansch
- 23a, 23b: Bohrung
- 24a, 24b: Feder
- 25a, 25b: Reuseneinlass
- 26: Filterkorb mit Filtergewebe
- 27a, 27b: zylindrischer Bereich
- 28a, 28b: konischer Bereich
- 29a, 29b: Schlauchventil
- 30a, 30b: zylindrischer Bereich mit kleinem Durchmesser
- 31a, 31b: umlaufender Ring
- 32: Schlauchventilelement
- 33: Hinterschneidung
- 34: Öffnung
- 35: Pfeil
- 36: Stromlinie
- 37a, 37b: Ventile
- 38: Hohlraum
- 39: Hohlraum
- 40: Filtereinsatz
- 41: Spalt
- 42a, 42b: Schwimmerventil
- 43a, 43b: konischer Einsatz
- 44a, 44b: Öffnung
- 45a, 45b: Zentrierdorn
- 46: Schwimmer
- 47: Mittelteil
- 48a, 48b: Führungssteg
- 49a, 49b: Gehäusestege
- 50a, 50b: Strömungskanal
- 51: umschlossener Raum

## Patentansprüche

1. Fluidfilter (2) geeignet zur Verwendung in einem hydraulischen System zur Betätigung einer Ausrückvorrichtung im Antriebsstrand eines Kraftfahrzeuges umfassend einen Geberzylinder (4), einen Nehmerzylinder (5) sowie eine diese verbindende Hydraulikleitung (6, 11, 12), in der der Fluidfilter (2) angeordnet werden kann, wobei der Fluidfilter (2) einen Filtereinsatz (40) umfasst, wobei eine Ventilanordnung ein Durchströmen des Filtereinsatzes (40) so bewirkt, dass dieser unabhängig von der Durchströmungsrichtung des Fluidfilters (2) nur in einer Richtung durchströmt wird, **dadurch gekennzeichnet, dass** der Fluidfilter (2) einen Bypass für den Filtereinsatz (40) umfasst, der bei Überschreiten einer Druckdifferenz über den Fluidfilter (2) öffnet und der Filtereinsatz (40) selbst in beide Durchströmungsrichtungen ein Überdruckventil bildet, das bei Öffnen den Bypass für den Filtereinsatz (40) bildet und der Filtereinsatz (40) gegen die Kraft mindestens einer Feder (24a, 24b) axial beweglich in einem Gehäuse (15) des Fluidfilters (2) gelagert ist, wobei der Filtereinsatz (40) an beiden Seiten in eine Bohrung (21 a, 21 b) eingreift und bei einer Bewegung aus der Bohrung (21 a, 21 b) heraus ein Spalt (41) geöffnet wird.

2. Fluidfilter nach Anspruch 1, **dadurch gekennzeichnet, dass** der Filtereinsatz (40) zumindest ein Rückschlagventil (37a, 37b) auf einer Stromseite aufweist, wobei der Filtereinsatz (40) einen Raum (51) umschließt, der über das Rückschlagventil (37a, 37b) bei Durchströmen des Fluidfilters (2) in eine Richtung mit Hydraulikfluid beaufschlagt wird, sodass Hydraulikfluid von dem umschlossenen Raum durch ein Filtermittel aus dem Filterkorb gedrückt wird und so das Hydraulikfluid gefiltert wird.

3. Fluidfilter nach Anspruch 2, **dadurch gekennzeichnet, dass** der Filtereinsatz (40) je ein Rückschlagventil (37a, 37b) auf beiden Stromseiten aufweist.

4. Fluidfilter nach Anspruch 2 oder 3, **dadurch gekennzeichnet, dass** die Rückschlagventile Schlauchventile (29a, 29b) sind oder einen Schwimmer (46) umfassen, der axial verlagerbar ist.

5. Fluidfilter nach einem der Ansprüche 1 bis 4, **dadurch gekennzeichnet, dass** der Filtereinsatz (26) einen hohlzylindrischen Teil umfasst, der zwischen zwei Ventilelementen (25a, 25b) angeordnet ist.

6. Fluidfilter nach Anspruch 5, **dadurch gekennzeichnet**, die Ventilelemente (25a, 25b) durch zwei Druckfedern (24a, 24b) vorgespannt in dem Gehäuse (15) angeordnet sind.

7. Hydraulisches System zur Betätigung einer Ausrückvorrichtung im Antriebsstrand eines Kraftfahrzeuges umfassend einen Geberzylinder (4), einen Nehmerzylinder (5) sowie eine diese verbindende Hydraulikleitung (6, 11, 12), in der ein Fluidfilter (2) nach einem der vorhergehenden Ansprüche angeordnet ist.

## Claims

1. Fluid filter (2) suitable for use in a hydraulic system for actuating a disengaging apparatus in the drive train of a motor vehicle comprising a master cylinder (4), a slave cylinder (5), and a hydraulic line (6, 11, 12) which connects them and in which the fluid filter (2) can be arranged, the fluid filter (2) comprising a filter insert (40), a valve arrangement bringing about a throughflow of the filter insert (40) in such a way that it is flowed through only in one direction independently of the throughflow direction of the fluid filter (2), **characterized in that** the fluid filter (2) comprises a bypass for the filter insert (40), which bypass opens if a pressure difference across the fluid filter (2) is exceeded, and the filter insert (40) itself forms a pressure relief valve in both throughflow directions which, when open, forms the bypass for the filter insert (40), and the filter insert (40) is mounted in a housing (15) of the fluid filter (2) such that it can be moved axially counter to the force of at least one spring (24a, 24b), the filter insert (40) engaging into a bore (21a, 21b) on both sides and a gap (41) being opened in the case of a movement out of the bore (21a, 21b).

2. Fluid filter according to Claim 1, **characterized in that** the filter insert (40) has at least one check valve (37a, 37b) on one flow side, the filter insert (40) enclosing a space (51) which is loaded with hydraulic fluid via the check valve (37a, 37b) when the fluid filter (2) is flowed through in one direction, with the result that hydraulic fluid is pressed from the enclosed space through a filter means out of the filter basket and the hydraulic fluid is thus filtered.

3. Fluid filter according to Claim 2, **characterized in that** the filter insert (40) has in each case one check valve (37a, 37b) on both flow sides.

4. Fluid filter according to Claim 2 or 3, **characterized in that** the check valves are pinch valves (29a, 29b) or comprise a float (46) which can be moved axially.

5. Fluid filter according to one of Claims 1 to 4, **characterized in that** the filter insert (26) comprises a hollow-cylindrical part which is arranged between two valve elements (25a, 25b).

6. Fluid filter according to Claim 5, **characterized in that** the valve elements (25a, 25b) are arranged in the housing (15) in a manner which is prestressed by way of two compression springs (24a, 24b).

7. Hydraulic system for actuating a disengaging apparatus in the drive train of a motor vehicle comprising a master cylinder (4), a slave cylinder (5), and a hydraulic line (6, 11, 12) which connects them and in which a fluid filter (2) according to one of the preceding claims is arranged.

## Revendications

1. Filtre à fluide (2) approprié pour l'utilisation dans un système hydraulique pour l'actionnement d'un dispositif de débrayage dans la chaîne cinématique d'un véhicule automobile, comprenant un maître-cylindre (4), un cylindre récepteur (5) ainsi qu'une conduite hydraulique (6, 11, 12) les reliant, dans laquelle peut être disposé le filtre à fluide (2), le filtre à fluide (2) comprenant un insert de filtre (40), un agencement de soupape provoquant un écoulement à travers l'insert de filtre (40) de telle sorte que celui-ci ne soit parcouru par l'écoulement que dans un sens indépendamment du sens d'écoulement à travers le filtre à fluide (2), **caractérisé en ce que** le filtre à fluide (2) comprend une dérivation pour l'insert de filtre (40) qui s'ouvre en cas de dépassement d'une différence de pression en travers du filtre à fluide (2) et l'insert de filtre (40) formant lui-même une soupape de surpression dans les deux sens d'écoulement, laquelle, lorsqu'elle s'ouvre, forme la dérivation pour l'insert de filtre (40) et l'insert de filtre (40) étant supporté de manière déplaçable axialement dans un boîtier (15) du filtre à fluide (2) à l'encontre de la force d'au moins un ressort (24a, 24b), l'insert de filtre (40) s'engageant au niveau des deux côtés dans un alésage (21a, 21b) et une fente (41) étant ouverte dans le cas d'un déplacement hors de l'alésage (21a, 21b).

2. Filtre à fluide selon la revendication 1, **caractérisé en ce que** l'insert de filtre (40) présente au moins un clapet antiretour (37a, 37b) sur un côté d'écoulement, l'insert de filtre (40) entourant un espace (51) qui est sollicité dans un sens avec du fluide hydraulique par le biais du clapet antiretour (37a, 37b) lors de l'écoulement à travers le filtre à fluide (2) de telle sorte que le fluide hydraulique soit pressé, depuis l'espace entouré, par un moyen filtrant hors du panier de filtre et que le fluide hydraulique soit ainsi filtré.

3. Filtre à fluide selon la revendication 2, **caractérisé en ce que** l'insert de filtre (40) présente à chaque fois un clapet antiretour (37a, 37b) sur les deux côtés d'écoulement.

4. Filtre à fluide selon la revendication 2 ou 3, **caractérisé en ce que** les clapets antiretour sont des vannes à manchon (29a, 29b) ou comprennent un flotteur (46) qui peut être déplacé axialement.

5. Filtre à fluide selon l'une quelconque des revendications 1 à 4, **caractérisé en ce que** l'insert de filtre (26) comprend une partie cylindrique creuse qui est disposée entre deux éléments de soupape (25a, 25b).

6. Filtre à fluide selon la revendication 5, **caractérisé en ce que** les éléments de soupape (25a, 25b) sont disposés dans le boîtier (15) de manière précontrainte par deux ressorts de compression (24a, 24b).

7. Système hydraulique pour l'actionnement d'un dispositif de débrayage dans la chaîne cinématique d'un véhicule automobile, comprenant un maître-cylindre (4), un cylindre récepteur (5) ainsi qu'une conduite hydraulique (6, 11, 12) les reliant, dans laquelle est disposé un filtre à fluide (2) selon l'une quelconque des revendications précédentes.
